# EUROPEAN PATENT APPLICATION

(11) **EP 4 538 810 A1**
(43) Date of publication of application: **16.04.2025**
(21) Application number: 23870308.6
(22) Date of filing: 12.09.2023
(51) Int. Cl.: G05B 19/042

(54) **DEVICE CONTROL METHOD, INTELLIGENT SWITCH AND CONTROL SYSTEM**

(30) Priority: 30.09.2022 CN 202211216433
(71) Applicant: Huawei Technologies Co., Ltd., Shenzhen, Guangdong 518129 (CN)
(72) Inventor: ZHANG, Fan, Shenzhen, Guangdong 518129 (CN); LI, Xiaolong, Shenzhen, Guangdong 518129 (CN); XUE, Guiying, Shenzhen, Guangdong 518129 (CN)
(74) Representative: Maiwald GmbH
(86) International application number: PCT/CN2023/118305
(87) International publication number: WO 2024/067070

(57) **Abstract**

A device control method, a smart switch, and a control system are provided. The method includes: A first smart switch sends a turn-on instruction to a second smart switch. The second smart switch switches a switch status of the second smart switch. The second smart switch sends first status feedback information to the first smart switch. The first smart switch switches a switch status. After a status switching action triggered for the first smart switch or the second smart switch is detected, the first smart switch exchanges data with the second smart switch, so that the first smart switch and the second smart switch can synchronously complete switching of switch statuses. This can avoid that any smart switch cannot work normally because the first smart switch and the second smart switch are in different statuses, and can improve stability and reliability of normal working of the first smart switch and the second smart switch.

## Description

This application claims priority to Chinese Patent Application No. 202211216433.1, filed with the China National Intellectual Property Administration on September 30, 2022 and entitled "DEVICE CONTROL METHOD, SMART SWITCH, AND CONTROL SYSTEM", which is incorporated herein by reference in its entirety.

### TECHNICAL FIELD

This application relates to the field of smart home technologies, and in particular, to a device control method, a smart switch, and a control system.

### BACKGROUND

With continuous development of smart home technologies, a smart switch also appears correspondingly. A smart home device may be connected to the smart switch. The smart home device is controlled to be turned on or turned off through the smart switch.

In a related technology, a two-way control scenario is used as an example. Two mechanical switches may be connected in series to a light fixture. The two mechanical switches connected in series may be replaced with two smart switches connected in parallel, so that a two-way control function can be implemented through the smart switches.

However, when the smart switch is in a turn-on state or a turn-off state, currents need to be obtained through different power obtaining modules to maintain working of the smart switch. If the two smart switches are in different statuses for a long time, one of the smart switches may stop working due to insufficient power supply. As a result, normal working cannot be implemented in the two-way control scenario.

### SUMMARY

This application provides a device control method, a smart switch, and a control system, to resolve a problem in a conventional technology that when two smart switches are in different statuses for a long time, one of the smart switches stops working due to insufficient power supply, and consequently normal working cannot be implemented in a two-way control scenario.

To achieve the foregoing objective, this application uses the following technical solutions.

According to a first aspect, a method is provided, applied to a first smart switch and a second smart switch. The first smart switch and the second smart switch are connected to an electrical device, and the method includes:
the first smart switch sends a turn-on instruction to the second smart switch, where the turn-on instruction instructs to switch a switch status of the second smart switch from a turn-off state to a turn-on state;
the second smart switch receives the turn-on instruction, and switches the switch status of the second smart switch;
the second smart switch sends first status feedback information to the first smart switch, where the first status feedback information indicates that switching of the switch status of the second smart switch is completed; and
the first smart switch receives the first status feedback information, and switches a switch status of the first smart switch.

The first smart switch sends the turn-on instruction to the second smart switch, so that the second smart switch can adjust the switch status of the second smart switch based on the turn-on instruction, and send the first status feedback information to the first smart switch. Correspondingly, the first smart switch determines, based on the first status feedback information, that the switching of the switch status of the second smart switch is completed, and switches the switch status of the first smart switch, so that the first smart switch and the second smart switch can synchronously complete switching of the switch statuses. This can avoid that any smart switch cannot work normally because the first smart switch and the second smart switch are in different statuses, and can improve stability and reliability of normal working of the first smart switch and the second smart switch.

In addition, a plurality of smart switches are disposed to replace original mechanical switches, so that the electrical device can be controlled through any smart switch. This can improve flexibility and aesthetics of a smart control system.

In a first possible implementation of the first aspect, the method further includes:
starting from that the first smart switch sends the turn-on instruction to the second smart switch, the first smart switch starts timing and collects a potential at the first smart switch; and
if after a first duration threshold is exceeded, the first smart switch does not receive the first status feedback information sent by the second smart switch, and the potential at the first smart switch does not change, the first smart switch sends the turn-on instruction to the second smart switch again.

In a manner of timing starting from sending the turn-on instruction, with reference to the preset first duration threshold, it may be determined whether the first smart switch needs to resend the turn-on instruction, to ensure that the second smart switch can switch the switch status based on the turn-on instruction, and improve reliability of switching the switch status by the second smart switch.

With reference to the first possible implementation of the first aspect, in a second possible implementation of the first aspect, the method further includes:
if the potential at the first smart switch is less than or equal to a preset voltage threshold, the first smart switch does not receive the first status feedback information sent by the second smart switch, and the first duration threshold is not exceeded, the first smart switch switches the switch status.

The potential at the first smart switch is detected and with reference to duration for timing of the first smart switch, it may be determined that the second smart switch is completed switching when the potential at the first smart switch decreases, so that the switch status of the first smart switch can be switched, and reliability of switching the switch status by the first smart switch can be improved.

With reference to the first possible implementation of the first aspect, in a third possible implementation of the first aspect, the method further includes:
if after a second duration threshold is exceeded, the first smart switch does not receive the first status feedback information sent by the second smart switch, and the potential at the first smart switch does not change, the first smart switch feeds back an exception.

Based on duration for timing performed by the first smart switch, when it is determined that after the second duration threshold is exceeded, the first smart switch does not receive the first status feedback information fed back by the second smart switch, and the potential at the first smart switch does not change, the first smart switch may determine that communication between the first smart switch and the second smart switch is abnormal, and feed back the exception. This can improve reliability of synchronizing the switch statuses of the first smart switch and the second smart switch.

With reference to any one of the possible implementations of the first aspect, in a fourth possible implementation of the first aspect, that the first smart switch sends the turn-on instruction to the second smart switch includes:
in response to status switching triggered for the first smart switch, the first smart switch sends the turn-on instruction to the second smart switch.

With reference to any one of the possible implementations of the first aspect, in a fifth possible implementation of the first aspect, data is exchanged between the first smart switch and the second smart switch in a wired communication or wireless communication manner.

Data is exchanged between the first smart switch and the second smart switch in a plurality of manners, so that flexibility of data exchange between the first smart switch and the second smart switch can be improved. Further, data is exchanged between the first smart switch and the second smart switch in a wired manner, so that a data delay between the first smart switch and the second smart switch can be reduced, and reliability and timeliness of data exchange can be improved.

According to a second aspect, another device control method is provided, applied to a first smart switch and a second smart switch. The first smart switch and the second smart switch are connected to an electrical device, and the method includes:
the first smart switch sends a turn-off preparation instruction to the second smart switch, where the turn-off preparation instruction instructs the second smart switch to prepare for switching from a turn-on state to a turn-off state;
the second smart switch receives the turn-off preparation instruction, and sends ready information to the first smart switch, where the ready information indicates that the second smart switch is ready to switch a switch status of the second smart switch;
the first smart switch receives the ready information, switches a switch status of the first smart switch from a turn-on state to a turn-off state, and sends a turn-off instruction to the second smart switch, where the turn-off instruction instructs the second smart switch to switch from the turn-on state to the turn-off state; and
the second smart switch receives the turn-off instruction, and switches the switch status of the second smart switch.

The first smart switch sends the turn-off preparation instruction to the second smart switch, so that the second smart switch can feed back the ready information to the first smart switch based on the turn-off preparation instruction. In this case, the first smart switch may switch the switch status of the first smart switch based on the ready information, and send the turn-off instruction to the second smart switch. Correspondingly, the second smart switch may receive the turn-off instruction, and switch the switch status of the second smart switch, so that the first smart switch and the second smart switch can synchronously complete switching of the switch statuses. This can avoid that any smart switch cannot work normally because the first smart switch and the second smart switch are in different statuses, and can improve stability and reliability of normal working of the first smart switch and the second smart switch.

In addition, the turn-off preparation instruction is sent to the second smart switch in advance, to avoid an exception of the second smart switch caused by a sudden current change of the second smart switch after the first switch suddenly switches the switch status. This can improve stability and reliability of synchronous switching of the switch statuses by the first smart switch and the second smart switch.

In addition, a plurality of smart switches are disposed to replace original mechanical switches, so that the electrical device can be controlled through any smart switch. This can improve flexibility and aesthetics of a smart control system.

In a first possible implementation of the second aspect, the method further includes:
starting from that the first smart switch sends the turn-off preparation instruction to the second smart switch, the first smart switch starts timing and collects a potential at the first smart switch; and
if after a first duration threshold is exceeded, the first smart switch does not receive the ready information sent by the second smart switch, and the potential at the first smart switch does not change, the first smart switch sends the turn-off preparation instruction to the second smart switch again, and re-performs timing.

In a manner of timing starting from sending the turn-off preparation instruction, with reference to the preset first duration threshold, it may be determined whether the first smart switch needs to resend the turn-off preparation instruction, to ensure that the second smart switch can successfully receive the turn-off preparation instruction, and improve stability of switching the switch status by the second smart switch.

With reference to the first possible implementation of the second aspect, in a second possible implementation of the second aspect, after the first smart switch sends the turn-off preparation instruction to the second smart switch again, and re-performs timing, the method further includes:
the second smart switch receives the turn-off preparation instruction, and sends the ready information to the first smart switch;
the first smart switch successfully receives the ready information, and the first smart switch switches the switch status of the first smart switch from the turn-on state to the turn-off state, and sends the turn-off instruction to the second smart switch; and
the second smart switch receives the turn-off instruction, and switches the switch status of the second smart switch.

The first smart switch sends the turn-off preparation instruction to the second smart switch again. When the second smart switch successfully receives the turn-off preparation instruction and feeds back the ready information, both the first smart switch and the second smart switch can synchronously switch the switch status. This can improve stability and reliability of switching the switch statuses by the first smart switch and the second smart switch.

With reference to the first possible implementation of the second aspect, in a third possible implementation of the second aspect, after the first smart switch sends the turn-off preparation instruction to the second smart switch again, and re-performs timing, the method further includes:
if duration for re-performing timing reaches a second duration threshold, and the potential at the first smart switch is less than a preset voltage threshold, the first smart switch switches the switch status from the turn-off state to the turn-on state again; and
the first smart switch feeds back an exception.

With reference to the third possible implementation of the second aspect, in a fourth possible implementation of the second aspect, the method further includes:
if the duration for re-performing timing reaches the second duration threshold, and the potential at the first smart switch is greater than or equal to the preset voltage threshold, the first smart switch determines that switching of the switch status of the second smart switch is completed.

Based on the duration for timing by the first smart switch, when the duration for timing reaches the second duration threshold, the first smart switch may determine, with reference to a value relationship between the potential at the first smart switch and the preset voltage threshold, whether the second smart switch completes switching of the switch status, to determine whether the switch status needs to be switched again. This can avoid an exception of the first smart switch and can improve reliability of switching the switch status by the first smart switch.

With reference to any one of the possible implementations of the second aspect, in a fifth possible implementation of the second aspect, after the second smart switch receives the turn-off instruction, and switches the switch status of the second smart switch based on the turn-off instruction, the method further includes:
the second smart switch sends second status feedback information to the first smart switch, where the second status feedback information indicates that the switching of the switch status of the second smart switch is completed; and
the first smart switch receives the second status feedback information, and determines that the switching of the switch status of the second smart switch is completed.

The second smart switch sends the second status feedback information to the first smart switch, to notify the first smart switch that the second smart switch has completed switching of the switch status, and the first smart switch does not need to switch the switch status again. This can improve reliability and stability of synchronous switching of the switch statuses by the first smart switch and the second smart switch.

With reference to any one of the possible implementations of the second aspect, in a sixth possible implementation of the second aspect, after the second smart switch receives the turn-off preparation instruction, the method further includes:
the second smart switch determines that communication between the first smart switch and the second smart switch is normal.

With reference to any one of the possible implementations of the second aspect, in a seventh possible implementation of the second aspect, that the first smart switch sends the turn-off preparation instruction to the second smart switch includes:
in response to status switching triggered for the first smart switch, the first smart switch sends the turn-off preparation instruction to the second smart switch.

With reference to any one of the possible implementations of the second aspect, in an eighth possible implementation of the second aspect, data is exchanged between the first smart switch and the second smart switch in a wired communication or wireless communication manner.

Data is exchanged between the first smart switch and the second smart switch in a plurality of manners, so that flexibility of data exchange between the first smart switch and the second smart switch can be improved. Further, data is exchanged between the first smart switch and the second smart switch in a wired manner, so that a data delay between the first smart switch and the second smart switch can be reduced, and reliability and timeliness of data exchange can be improved.

According to a third aspect, a smart switch is provided. The smart switch includes: a processor, a magnetic latching relay, an on-state voltage detection module, an off-state voltage detection module, an on-state power obtaining circuit, an off-state power obtaining circuit, and a power conversion circuit.

The processor is connected to both the magnetic latching relay and the power conversion circuit. The magnetic latching relay and the on-state power obtaining circuit that are connected in series are connected in parallel to the off-state power obtaining circuit. Both the off-state power obtaining circuit and the on-state power obtaining circuit are connected to the power conversion circuit.

Both an output end of the on-state voltage detection module and an output end of the off-state voltage detection module are connected to the processor. An input end of the on-state voltage detection module is connected to an output end of the on-state power obtaining circuit. An input end of the off-state voltage detection module is connected to an output end of the off-state power obtaining circuit.

In a first possible implementation of the third aspect, the output end of the on-state power obtaining circuit is a voltage collection point corresponding to the on-state voltage detection module, and the output end of the off-state power obtaining circuit is a voltage collection point corresponding to the off-state voltage detection module.

The on-state voltage detection module includes a switch device, an energy storage capacitor, a voltage divider resistor, and a pull-up resistor, and/or the off-state voltage detection module includes a switch device, an energy storage capacitor, a voltage divider resistor, and a pull-up resistor.

The voltage divider resistor is connected in series between a control end of the switch device and the corresponding voltage collection point. The pull-up resistor is connected in series between a first end of the switch device and a power supply voltage. The energy storage capacitor is connected in series between the corresponding voltage collection point and a ground potential. The first end of the switch device is connected to the processor. A second end of the switch device is connected to the ground potential.

In a second possible implementation of the third aspect, the output end of the on-state power obtaining circuit is a voltage collection point corresponding to the on-state voltage detection module, and the output end of the off-state power obtaining circuit is a voltage collection point corresponding to the off-state voltage detection module.

The on-state voltage detection module includes a comparison module, an energy storage capacitor, and voltage divider resistors, and/or the off-state voltage detection module includes a comparison module, an energy storage capacitor, and voltage divider resistors.

A first input end of the comparison module is connected to a reference voltage. A second input end of the comparison module is connected to the corresponding voltage collection point. An output end of the comparison module is connected to the processor.

The voltage divider resistors are separately connected in series between the first input end of the comparison module and the reference voltage, and connected in series between the second input end of the comparison module and the corresponding voltage collection point.

The energy storage capacitor is connected in series between the corresponding voltage collection point and a ground potential.

According to a fourth aspect, a control system is provided. The control system includes a first smart switch and a second smart switch. The first smart switch and the second smart switch are connected to an electrical device.

The first smart switch and the second smart switch are configured to synchronize switch statuses of the first smart switch and the second smart switch based on the device control method according to any one of the first aspect or the second aspect.

According to a fifth aspect, a computer-readable storage medium is provided. The computer-readable storage medium stores a computer program. When the computer program is executed by a processor, the device control method according to any one of the first aspect or the second aspect is performed.

According to a sixth aspect, a chip system is provided. The chip system includes a memory and a processor. The processor executes a computer program stored in the memory, to implement the device control method according to any one of the first aspect or the second aspect.

It may be understood that, for beneficial effects of the third aspect to the sixth aspect, refer to the related descriptions in the first aspect or the second aspect. Details are not described herein again.

### BRIEF DESCRIPTION OF DRAWINGS

FIG. 1A is a schematic of a circuit of a conventional control system according to an embodiment of this application;
FIG. 1B is a schematic of a circuit of a smart control system according to an embodiment of this application;
FIG. 1C is a schematic of a circuit of another smart control system according to an embodiment of this application;
FIG. 2 is a diagram of application of a single live wire smart switch according to an embodiment of this application;
FIG. 3A is a diagram of a structure of a smart switch according to an embodiment of this application;
FIG. 3B is a diagram of structures/a structure of an on-state voltage detection module and/or an off-state voltage detection module according to an embodiment of this application;
FIG. 3C is a diagram of structures/a structure of another on-state voltage detection module and/or another off-state voltage detection module according to an embodiment of this application;
FIG. 4A is a diagram of a scenario of a two-way control scenario existing based on a smart switch according to an embodiment of this application;
FIG. 4B is a diagram of a scenario of another two-way control scenario existing based on a smart switch according to an embodiment of this application;
FIG. 4C is a diagram of a scenario of still another two-way control scenario existing based on a smart switch according to an embodiment of this application; and
FIG. 5 is a schematic flowchart of a device control method according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, a person skilled in the art should know that this application may also be implemented in other embodiments without these specific details. In other cases, detailed descriptions of a well-known switching method for a smart switch, a communication method between smart switches, and a smart switch are omitted, to avoid unnecessary details hindering description of this application.

Terms used in the following embodiments are merely intended to describe specific embodiments, but are not intended to limit this application. Terms "one", "the", "the foregoing", and "this" of singular forms used in this specification and the appended claims of this application are also intended to include expressions such as "one or more", unless otherwise specified in the context clearly.

With continuous development of science and technology, conventional electrical devices gradually develop towards intelligence, and more smart home devices are formed. Accordingly, conventional switches (such as mechanical switches) that control the electrical devices gradually develop into smart switches. In a smart home scenario, a smart switch may be connected to a smart home device, and the smart home device is controlled through the smart switch.

The following describes a device control method, a smart switch, and a control system that are provided in embodiments of this application by using an example in which a light fixture is a smart home device.

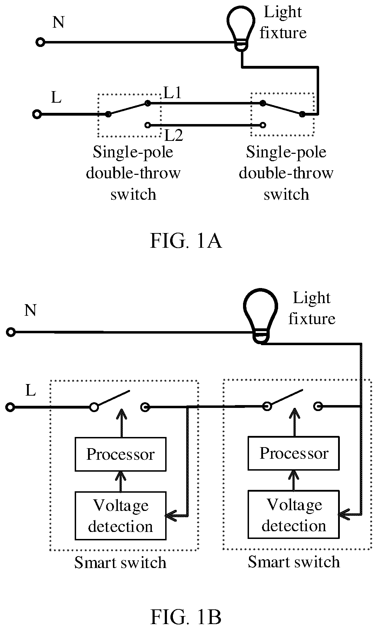

FIG. 1A is a schematic of a circuit of a conventional control system according to an embodiment of this application. As shown in FIG. 1A, the conventional control system includes two single-pole double-throw switches, and the two single-pole double-throw switches are both connected in series to a light fixture. The two single-pole double-throw switches can be mounted at different positions, so that a same light fixture can be controlled at different positions through the two single-pole double-throw switches.

FIG. 1B is a schematic of a circuit of a smart control system according to an embodiment of this application. As shown in FIG. 1B, the smart control system includes two smart switches, and the two smart switches are both connected in series to a light fixture. Any smart switch may detect a potential of the smart switch through a voltage detection module. Alternatively, the two smart switches may be synchronously turned on through data exchange between the two smart switches, to implement two-way control of the light fixture.

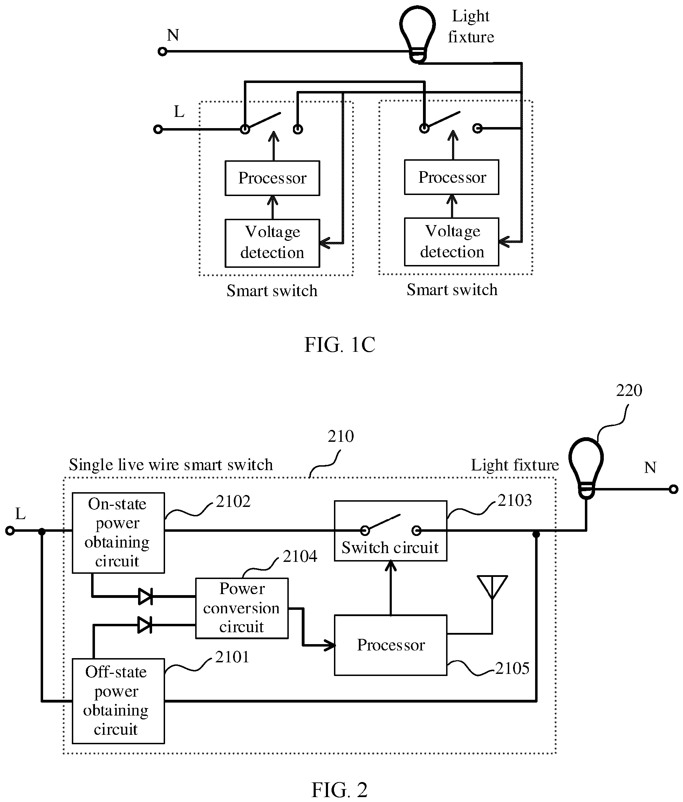

FIG. 1C is a schematic of a circuit of another smart control system according to an embodiment of this application. As shown in FIG. 1C, the smart control system also includes two smart switches. The two smart switches are connected in parallel, and the two smart switches connected in parallel are connected in series to a light fixture, to control the light fixture.

It should be noted that, in a process of connecting the mechanical switch to the light fixture, the mechanical switch and the light fixture only need to be connected in series to a live wire (L). However, in a process of replacing the mechanical switch with the smart switch, to enable the smart switch to be continuously powered on, the smart switch further needs to be connected to a neutral wire (N). However, during actual application, due to impact of circuit wiring, no neutral wire is disposed in a switch slot in which the mechanical switch is mounted, and the circuit wiring needs to be adjusted to replace the mechanical with the smart switch.

Therefore, a single live wire smart switch (referred to as a smart switch) that needs to be connected to only the live wire gradually appears. In other words, a single live wire smart switch that can work normally when connected to only the live wire gradually appears.

In conclusion, in the smart home scenario, the mechanical switch gradually develops into the smart switch. With reference to impact of indoor circuit wiring, the single live wire smart switch is further derived based on the smart switch, so that the original mechanical switch can be conveniently replaced with the single live wire smart switch, and the smart home device can be controlled through the single live wire smart switch.

The following further describes the single live wire smart switch.

FIG. 2 is a diagram of application of a single live wire smart switch according to an embodiment of this application. As shown in FIG. 2, the single live wire smart switch 210 is connected in series to a light fixture 220. The single live wire smart switch 210 may include an off-state power obtaining circuit 2101, an on-state power obtaining circuit 2102, a switch circuit 2103, a power conversion circuit 2104, and a processor 2105.

The switch circuit 2103 may be a magnetic latching relay, or may be a circuit formed by another switch device. The switch circuit 2103 is not specifically limited in embodiments of this application.

Specifically, the processor 2105 is connected to both the switch circuit 2103 and the power conversion circuit 2104. Both the off-state power obtaining circuit 2101 and the on-state power obtaining circuit 2102 are connected to the power conversion circuit 2104. The off-state power obtaining circuit 2101 and the on-state power obtaining circuit 2102 are further connected in parallel between the live wire and the light fixture 220, the switch circuit 2103 is further connected in series between the on-state power obtaining circuit 2102 and the light fixture 220, and the light fixture 220 is further connected to the neutral wire.

A diode may be disposed between the power conversion circuit 2104 and both the off-state power obtaining circuit 2101 and the on-state power obtaining circuit 2102, to avoid current backflow. In addition, the processor 2105 may be a wireless communication system on chip (system on chip, SoC) circuit, or may be another chip having a communication function and an output processing function. The processor is not limited in embodiments of this application.

When the smart switch 210 is in a turn-on state, the smart switch 210 and the light fixture 220 may form a circuit loop, so that the light fixture 220 is in an on state. The smart switch 210 may obtain a voltage and a current through the on-state power obtaining circuit 2102, convert the obtained voltage and current through the power conversion circuit 2104, and then provide the converted voltage and current to the processor 2105, to maintain normal working of the processor 2105.

If the smart switch 210 detects a status switching operation triggered by a user, the processor 2105 may perform status switching on the switch circuit 2103, so that the smart switch 210 may switch from a turn-on state to a turn-off state.

Correspondingly, after the switch circuit 2103 performs the status switching, the smart switch 210 enters the turn-off state, and the light fixture enters an off state. In addition, the smart switch 210 no longer obtains the voltage and the current through the on-state power obtaining circuit 2102, but obtains the voltage and the current through the off-state power obtaining circuit 2101, to maintain normal working of the smart switch 210.

The off-state power obtaining circuit 2101 and the on-state power obtaining circuit 2102 have different principles for obtaining the voltage and the current.

Corresponding to the smart control system shown in FIG. 1B and FIG. 1C, when the smart switch 210 is in the turn-on state or the turn-off state, different circuits and principles need to be used to obtain the voltage and the current. If two smart switches in the smart control system are in different statuses for a long time, the two smart switches require different current values. A smart switch that requires a large current is affected by a smart switch that requires a small current, and the smart switch that requires a large current cannot work normally due to insufficient power supply.

Therefore, embodiments of this application provide the single live wire smart switch and the device control method. The voltage detection module is added to the smart switch, to determine the turn-on state or the turn-off state of the smart switch, and data is exchanged with another smart switch, so that a plurality of smart switches in the smart control system can be synchronously turned on or turned off. This can improve stability of normal working of the plurality of smart switches.

The following first describes the smart switch provided in embodiments of this application.

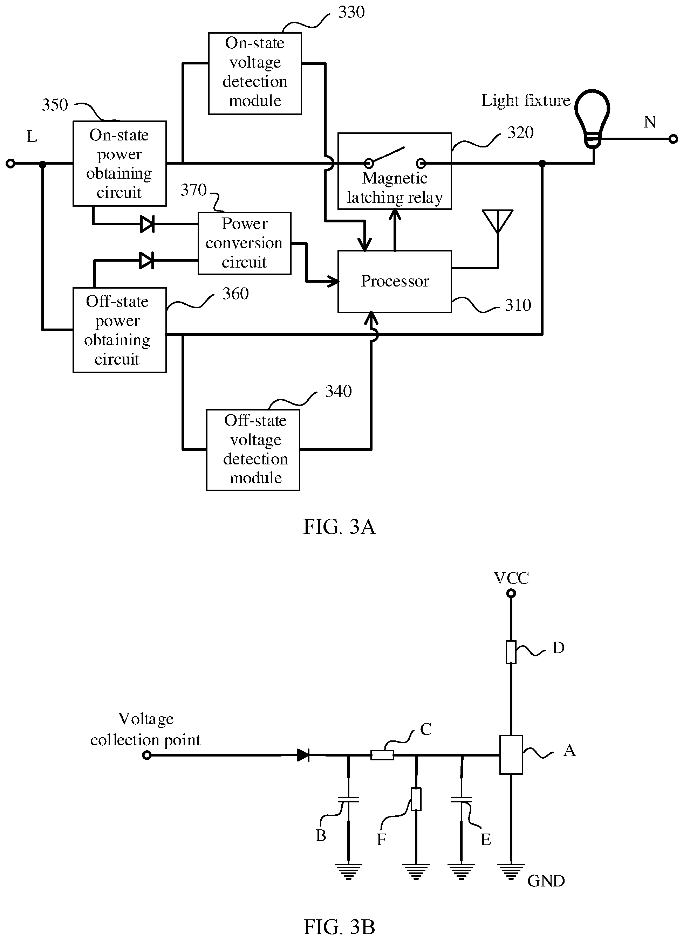

FIG. 3A is a diagram of a structure of a smart switch according to an embodiment of this application. As shown in FIG. 3A, the smart switch may include a processor 310, a magnetic latching relay 320, an on-state voltage detection module 330, an off-state voltage detection module 340, an on-state power obtaining circuit 350, an off-state power obtaining circuit 360, and a power conversion circuit 370.

A connection manner of the foregoing smart switch is similar to the connection manner of the smart switch shown in FIG. 2. Details are not described herein again.

It should be noted that an on-state voltage detection module 330 and an off-state voltage detection module 340 are added to the smart switch shown in FIG. 3A. The smart switch may determine, through the on-state voltage detection module 330 and the off-state voltage detection module 340, a current actual working environment status of the smart switch, that is, determine a status of a light fixture connected to the smart switch and a status of another smart switch.

An input end of the on-state voltage detection module 330 is connected to an output end of the on-state power obtaining circuit 350, and an output end of the on-state voltage detection module 330 is connected to the processor 310. Similarly, an input end of the off-state voltage detection module 340 is connected to an output end of the off-state power obtaining circuit 360, and an output end of the off-state voltage detection module 340 is connected to the processor 310.

Correspondingly, in a working process of the smart switch, when the smart switch is in a turn-on state or a turn-off state, a potential of the output end of the on-state power obtaining circuit 350 or the off-state power obtaining circuit 360 may be collected through the on-state voltage detection module 330 or the off-state voltage detection module 340, to determine an actual working environment status of the smart switch.

FIG. 3B is a diagram of structures/a structure of an on-state voltage detection module and/or an off-state voltage detection module according to an embodiment of this application. As shown in FIG. 3B, the on-state voltage detection module 330 may include a switch device A, an energy storage capacitor B, a voltage divider resistor C, and a pull-up resistor D, and/or the off-state voltage detection module 340 may include a switch device A, an energy storage capacitor B, a voltage divider resistor C, and a pull-up resistor D.

The output end of the on-state power obtaining circuit 350 is a voltage collection point corresponding to the on-state voltage detection module 330, and the output end of the off-state power obtaining circuit 360 is a voltage collection point corresponding to the off-state voltage detection module 340. Correspondingly, the voltage divider resistor C is connected in series between a control end of the switch device A and the corresponding voltage collection point. The pull-up resistor D is connected in series between a first end of the switch device A and a power supply voltage (VCC). A second end of the switch device A is connected to a ground potential (GND).

In addition, the energy storage capacitor B may be connected in series between the voltage collection point and the ground potential. The first end of the switch device A may be connected to the processor 310 shown in FIG. 3A.

In the working process of the foregoing smart switch, both the smart switch and the light fixture are connected to an alternating current grid, and a direction of a current flowing through the smart switch and the light fixture continuously changes with a cycle of an alternating current.

If the light fixture is in an on state, and the alternating current flows from a neutral wire to a live wire, a voltage gradually increases, and the energy storage capacitor B is charged in the increasing process, so that the control end of the switch device A maintains at a high potential. In a working state, the smart switch may control the magnetic latching relay in the on-state power obtaining circuit 350 to be turned on, and the alternating current reaches the live wire through the switch device A, and no longer charges the energy storage capacitor B. The energy storage capacitor B may continuously discharge, and maintain the control end of the switch device A at a high potential until a next cycle of the alternating current is reached.

It should be noted that the switch device A may be a transistor, or may be a metal-oxide-semiconductor field-effect transistor (metal-oxide-semiconductor field-effect transistor, MOSFET), or may be another device having a switching function. The switch device A is not limited in embodiments of this application.

For example, when the switch device A is a transistor, the control end of the switch device A may be a base of the transistor, the first end of the switch device A may be a collector of the transistor, and the second end of the switch device A may be an emitter of the transistor.

Alternatively, when the switch device A is a MOSFET, the control end of the switch device A may be a gate of the MOSFET, the first end of the switch device A may be a drain or a source of the MOSFET, and the second end of the switch device A may be a source or a drain of the MOSFET.

In addition, the on-state voltage detection module 330 may further include a filter capacitor E and a filter resistor F, and/or the off-state voltage detection module 340 may further include a filter capacitor E and a filter resistor F. Both the filter capacitor E and the filter resistor F may be connected in series between the control end of the switch device A and the ground potential, so that the filter capacitor E and the filter resistor F may filter spikes, glitches, and noise in the alternating current.

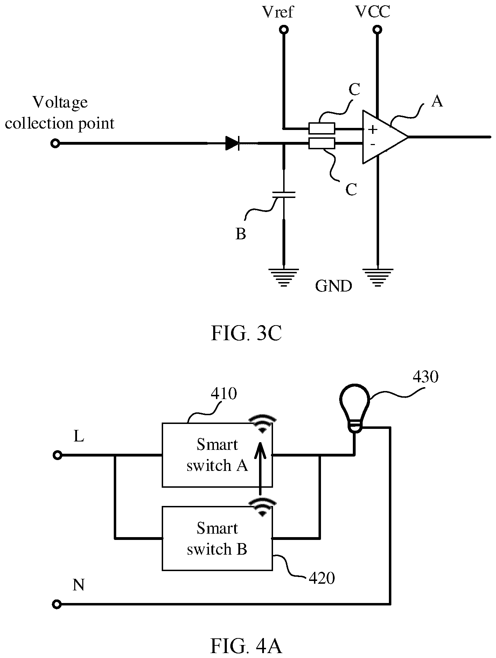

In addition, during actual application, the on-state voltage detection module 330 and/or the off-state voltage detection module 340 may further include another component. As shown in FIG. 3C, the on-state voltage detection module 330 may include a comparison module A, an energy storage capacitor B, and voltage divider resistors C, and/or the off-state voltage detection module 340 may include a comparison module A, an energy storage capacitor B, and voltage divider resistors C.

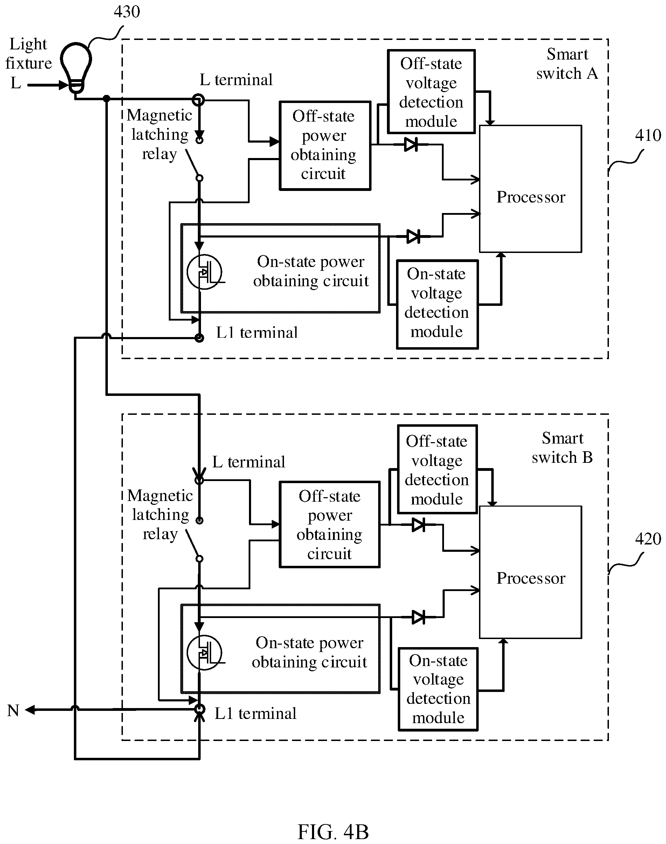

A first input end of the comparison module A is connected to a reference voltage (Vref). A second input end of the comparison module A is connected to the corresponding voltage collection point. An output end of the comparison module A is connected to the processor 310 shown in FIG. 4B. For example, as shown in FIG. 3C, a positive input end of the comparison module A is connected to the reference voltage. A negative input end of the comparison module A is connected to the corresponding voltage collection point.

In addition, the voltage divider resistors C may be separately connected in series between the first input end of the comparison module A and the reference voltage, and connected in series between the second input end of the comparison module A and the voltage collection point. In addition, the energy storage capacitor B is connected in series between the voltage collection point and the ground potential (GND).

Working processes/a working process of the on-state voltage detection module 330 and/or the off-state voltage detection module 340 shown in FIG. 3C are/is similar to working processes/a working process of the on-state voltage detection module 330 and/or the off-state voltage detection module 340 shown in FIG. 3B. Details are not described herein again.

It should be noted that, in a working process, the comparison module A may compare a potential of the voltage collection point with a reference potential. If the potential of the voltage collection point is less than the reference potential, a signal output by the comparison module A may indicate that the light fixture is in an off state. If the potential of the voltage collection point is greater than or equal to the reference potential, a signal output by the comparison module A may indicate that the light fixture is in an on state.

The comparison module A may be a comparator, or may be a comparison circuit including a plurality of components, or may be another circuit module having a comparison function. The comparison module A is not limited in embodiments of this application.

The following uses a control system formed after two smart switches are connected as an example to describe a scenario in which the control system is connected in series to a light fixture and a device control method provided in embodiments of this application.

First, a two-way control scenario related to the device control method provided in embodiments of this application is described. FIG. 4A is a diagram of a scenario of a two-way control scenario existing based on a smart switch according to an embodiment of this application. The two-way control scenario includes a smart switch A 410, a smart switch B 420, and a light fixture 430.

The smart switch A 410 is connected in parallel to the smart switch B 420, the smart switch A 410 and the smart switch B 420 that are connected in parallel are connected in series between a live wire and the light fixture 430, and the light fixture 430 is further connected to a neutral wire.

Further, FIG. 4B is a diagram of a scenario of another two-way control scenario existing based on a smart switch according to an embodiment of this application. As shown in FIG. 4B, one end of a light fixture 430 is connected to a live wire, the other end is connected to both an L terminal of a smart switch A 410 and an L terminal of a smart switch B 420, and both an L1 terminal of the smart switch A 410 and an L1 terminal of the smart switch B 420 are connected to a neutral wire.

Specifically, when magnetic latching relays of the smart switch A 410 and the smart switch B 420 are both turned on, both the smart switch A 410 and the smart switch B 420 are in a turn-on state, and can form a circuit loop with the light fixture 430, so that the light fixture 430 is in an on state. In addition, each smart switch may obtain a voltage and a current through the on-state power obtaining circuit, to maintain normal working of the smart switch.

When any smart switch detects a status switching operation triggered by the user, the smart switch may trigger status switching for the magnetic latching relay, so that the smart switch switches to a turn-off state. In addition, the smart switch may further send an instruction to another smart switch, to control the another smart switch to switch to the turn-off state, to complete switching of the light fixture 430 from the on state to the off state.

Correspondingly, when the magnetic latching relays of the smart switch A 410 and the smart switch B 420 are both turned off, both the smart switch A 410 and the smart switch B 420 are in a turn-off state, and cannot form a circuit loop with the light fixture 430, so that the light fixture 430 is in the off state.

It should be noted that, the smart switch A 410 may communicate with the smart switch B 420 in a wired manner or a wireless manner. In a wireless communication process, the smart switch A 410 may send an instruction to the smart switch B 420, or the smart switch B 420 may send an instruction to the smart switch A 410, or an instruction may be forwarded to the smart switch by using a preset communication gateway. A communication manner between the smart switch A 410 and the smart switch B 420 is not specifically limited in embodiments of this application.

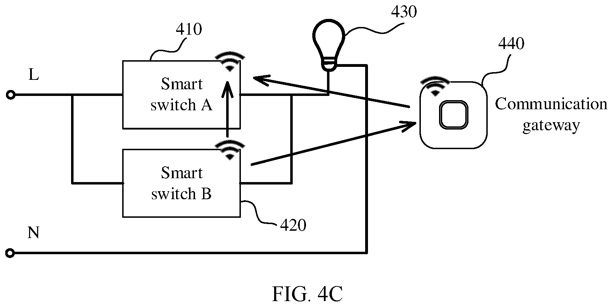

For example, as shown in FIG. 4C, the two-way control scenario may further include a communication gateway 440. The communication gateway 440 may receive the instruction sent by the smart switch A 410, and forward the instruction to the smart switch B 420, or may receive the instruction sent by the smart switch B 420, and forward the instruction to the smart switch A 410.

The instruction sent between the smart switch A 410 and the smart switch B 420 may include at least one of a turn-on instruction, a turn-off preparation instruction, and a turn-off instruction. The turn-on instruction instructs the smart switch to switch to a turn-on state. The turn-off instruction instructs the smart switch to switch to a turn-off state. The turn-off preparation instruction instructs the smart switch to prepare for switching to the turn-off state. The instruction sent between the smart switch A 410 and the smart switch B 420 is not specifically limited in embodiments of this application.

The following describes a device control method provided in embodiments of this application based on the foregoing two-way control scenario.

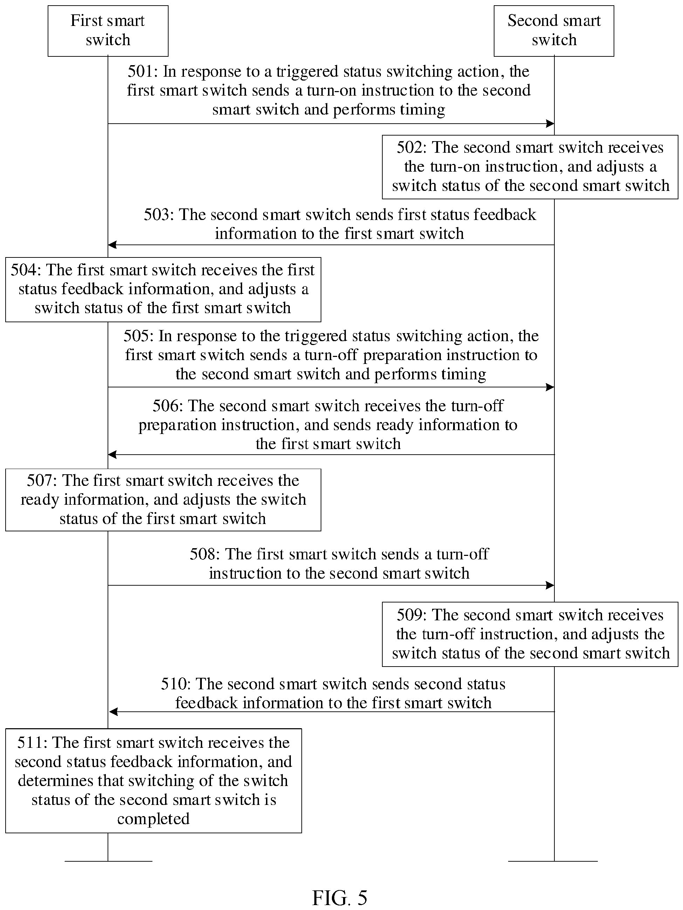

FIG. 5 is a schematic flowchart of a device control method according to an embodiment of this application. As an example rather than a limitation, the method may be applied to two smart switches in the foregoing two-way control scenario. The following uses a first smart switch and a second smart switch to represent the two smart switches in the foregoing two-way control scenario. For ease of description, in this embodiment of this application, a light fixture is used as a smart home device for description. As shown in FIG. 5, the method includes the following steps.

Step 501: In response to a triggered status switching action, the first smart switch sends a turn-on instruction to the second smart switch and performs timing.

In the two-way control scenario, after the light fixture is connected in series to the first smart switch and the second smart switch that are connected in parallel, the light fixture may be controlled through any smart switch, that is, the light fixture is controlled to switch between an on state and an off state. Correspondingly, an example in which the status switching action is triggered for the first smart switch, and the light fixture is currently in the off state is used to describe a device control method for switching the light fixture from the off state to the on state and then from the on state to the off state based on status synchronization between the first smart switch and the second smart switch.

The status switching action may be an action that is triggered by a user and that is used to switch a status of the light fixture. In addition, the status switching action may be triggered for the smart switch, or may be triggered for an application installed on a terminal device, or may be triggered for other software or hardware that can control the first smart switch. This is not limited in embodiments of this application.

The first smart switch may detect the status switching action triggered by the user. If the first smart switch detects that the user triggers the status switching action, the first smart switch may perform status switching based on the status switching action, so that the first smart switch and the second smart switch change synchronously, and therefore the light fixture is controlled.

Specifically, after detecting the triggered status switching action, the first smart switch may generate the turn-on instruction in response to the status switching action, and send the turn-on instruction to the second smart switch, so that in a subsequent step, the second smart switch may adjust a switch status of the second smart switch based on the turn-on instruction.

The switch status indicates a current status of the smart switch, for example, a turn-on state or a turn-off state. In addition, the turn-on instruction instructs the smart switch to switch to the turn-on state.

In addition, when sending the turn-on instruction, the first smart switch may start timing, and collect a potential at the first smart switch, that is, collect a potential at an off-state voltage detection module of the first smart switch. If duration for timing is greater than or equal to a first duration threshold, and the potential at the first smart switch remains unchanged, the first smart switch may determine that the turn-on instruction fails to be sent, the second smart switch does not successfully receive the turn-on instruction, the first smart switch may send the turn-on instruction to the second smart switch again, and the first smart switch may restart timing.

Step 502: The second smart switch receives the turn-on instruction, and adjusts the switch status of the second smart switch.

In correspondence to step 501, the second smart switch may receive the turn-on instruction sent by the first smart switch, and control, based on the turn-on instruction, a magnetic latching relay of the second smart switch to switch from a turn-off state to a turn-on state, so that the switch status of the second smart switch is also switched to the turn-on state.

Specifically, the second smart switch may receive the turn-on instruction of the first smart switch by using a wireless communication function of a processor, and output a pulse signal to the magnetic latching relay based on the turn-on instruction, so that the magnetic latching relay may switch from the turn-off state to the turn-on state based on the pulse signal, and the second smart switch also switches from the turn-off state to the turn-on state.

Step 503: The second smart switch sends first status feedback information to the first smart switch.

The first status feedback information indicates that switching of the switch status of the second smart switch is completed.

After the switching of the switch status of the second smart switch is completed, the second smart switch may further send the first status feedback information to the first smart switch, so that the first smart switch may determine, based on the first status feedback information, that the second smart switch has completed the switching of the switch status.

Specifically, after outputting the pulse signal through the processor, the second smart switch may determine that the magnetic latching relay of the second smart switch switches from the turn-off state to the turn-on state, and the second smart switch also switches from the turn-off state to the turn-on state, so that the second smart switch may generate the first status feedback information, and send the first status feedback information to the first smart switch.

It should be noted that a sequence of performing step 502 and then performing step 503 is described in this application. However, during actual application, the second smart switch may simultaneously perform step 502 and step 503. A sequence of performing step 502 and step 503 by the second smart switch is not limited in embodiments of this application.

Step 504: The first smart switch receives the first status feedback information, and adjusts a switch status of the first smart switch.

In correspondence to step 503, after sending the turn-on instruction in step 501, the first smart switch may receive the first status feedback information fed back by the second smart switch, and adjust the switch status of the first smart switch based on the first status feedback information, so that the first smart switch and the second smart switch can synchronously complete switching of switch statuses.

A process of adjusting the switch status of the first smart switch in step 504 is similar to a process of adjusting the switch status of the second smart switch in step 502. Details are not described herein again.

It should be noted that, during actual application, the second smart switch may fail to send the first status feedback information, and the first smart switch may fail to receive the first status feedback information. In this case, the first smart switch cannot receive the first status feedback information sent by the second smart switch.

Correspondingly, when performing timing in step 501, the first smart switch may further continuously collect a potential at an output end of an off-state power obtaining circuit through the off-state voltage detection module, that is, collect the potential at the first smart switch. If the collected potential continuously decreases, and after the duration for timing exceeds the first duration threshold, the potential at the first smart switch is less than or equal to a preset voltage threshold, it indicates that the switching of the switch status of the second smart switch may be completed. In this case, the first smart switch may switch the status of the first smart switch, and stop timing, so that the first smart switch switches from the turn-off state to the turn-on state, and synchronous switching of the switch statuses of the first smart switch and the second smart switch is implemented.

In addition, if after a second duration threshold is exceeded, the first smart switch still does not receive the first status feedback information sent by the second smart switch, and the potential at the first smart switch does not change, that is, the potential at the first smart switch remains unchanged, it indicates that a control system in which the first smart switch and the second smart switch are located is abnormal, and the first smart switch may feed back an exception.

For example, the first smart switch may display a control system exception; or may send exception information to the application installed in the terminal device, to notify, by using the application, that the control system is abnormal; or may notify, in another manner, that the control system is abnormal. A manner in which the first smart switch feeds back the exception is not specifically limited in embodiments of this application.

The second duration threshold, the voltage threshold, and the first duration threshold mentioned in step 501 are all preset parameters. The first duration threshold and the second duration threshold may be determined based on response time of the smart switch, and the voltage threshold may be determined based on a voltage required for the smart switch to work normally. A manner and a parameter of determining the first duration threshold, the second duration threshold, and the voltage threshold are not specifically limited in embodiments of this application.

In addition, the first duration threshold may be less than or equal to the second duration threshold. The first smart switch may determine, based on the first duration threshold and the second duration threshold, whether the first smart switch needs to resend the turn-on instruction, or whether the switch status needs to be switched.

Step 505: In response to the triggered status switching action, the first smart switch sends a turn-off preparation instruction to the second smart switch and performs timing.

After the process of turning on the light fixture through the first smart switch and the second smart switch in step 501 to step 504 is described, in step 505, a process of turning off the light fixture through the status switching action triggered by the first smart switch again may be described.

A process in which the first smart switch sends the turn-off preparation instruction to the second smart switch and performs timing in step 505 is similar to a process in which the first smart switch sends the turn-on instruction to the second smart switch and performs timing in step 501. Details are not described herein again.

It should be noted that, when starting timing, the first smart switch may further collect the potential at the first smart switch through the off-state voltage detection module, that is, collect the potential at the output end of the off-state power obtaining circuit. If after the first duration threshold is exceeded, the potential collected by the first smart switch does not change, it indicates that the switching of the switch status of the second smart switch is not completed. In this case, the first smart switch may determine that the turn-off preparation instruction fails to be sent, and the first smart switch may send the turn-off preparation instruction to the second smart switch again, re-perform timing, and re-collect the potential at the first smart switch.

Step 506: The second smart switch receives the turn-off preparation instruction, and sends ready information to the first smart switch.

In correspondence to step 505, when the light fixture is in the on state, the second smart switch may receive the turn-off preparation instruction sent by the first smart switch, generate the ready information based on the turn-off preparation instruction, and feed back the ready information to the first smart switch, so that in a subsequent step, the first smart switch may switch the switch status of the first smart switch based on the ready information.

The ready information indicates that the smart switch is ready to switch the switch status.

In addition, after receiving the turn-off preparation instruction, the second smart switch may determine, based on the turn-off preparation instruction, that communication between the first smart switch and the second smart switch is normal, and does not need to feed back a control system exception or feed back maintenance of the first smart switch, the second smart switch, and a current local area network.

It should be noted that the turn-off preparation instruction received by the second smart switch in step 506 may be the turn-off preparation instruction sent for the first time in step 505, or may be a turn-off preparation instruction sent again by the first smart switch after the first duration threshold is exceeded. The turn-off preparation instruction received by the second smart switch is not specifically limited in embodiments of this application.

Step 507: The first smart switch receives the ready information, and adjusts the switch status of the first smart switch.

In correspondence to step 505, after sending the turn-off preparation instruction in step 505, the first smart switch may receive the ready information fed back by the second smart switch, and adjust the switch status of the first smart switch based on the ready information.

A process of adjusting the switch status of the first smart switch in step 507 is similar to a process of adjusting the switch status of the first smart switch in step 504. Details are not described herein again.

Step 508: The first smart switch sends a turn-off instruction to the second smart switch.

The turn-off instruction instructs the smart switch to switch to the turn-off state.

In step 508, after completing the switching of the switch status, the first smart switch may generate the turn-off instruction, and send the turn-off instruction to the second smart switch. This process is similar to the process in step 501. Details are not described herein again.

Step 509: The second smart switch receives the turn-off instruction, and adjusts the switch status of the second smart switch.

Similar to step 502, a process of adjusting the switch status of the second smart switch in step 509 is similar to the process of adjusting the switch status of the second smart switch in step 502. Details are not described herein again.

Step 510: The second smart switch sends second status feedback information to the first smart switch.

The second status feedback information indicates that switching of the switch status of the second smart switch is completed.

Similar to step 503, a process in which the second smart switch sends the second status feedback information to the first smart switch in step 510 is similar to a process in which the second smart switch sends the first status feedback information to the first smart switch in step 503. Details are not described herein again.

Step 511: The first smart switch receives the second status feedback information, and determines that the switching of the switch status of the second smart switch is completed.

In correspondence to step 508, after sending the turn-off instruction in step 508, the first smart switch may receive the second status feedback information fed back by the second smart switch, and determine, based on the second status feedback information, that the switching of the switch status of the second smart switch is completed, so that synchronous switching of the switch statuses of the first smart switch and the second smart switch is implemented.

It should be noted that, during actual application, even if the first smart switch successfully sends the turn-off preparation instruction, and the second smart switch successfully receives the turn-off preparation instruction, the first smart switch may still fail to send the turn-off instruction, and the second smart switch may also fail to receive the turn-off instruction. In this case, the second smart switch cannot receive the turn-off instruction sent by the first smart switch. Consequently, the switch status of the second smart switch fails to be switched.

Correspondingly, when starting timing in step 505, the first smart switch may further collect the potential at the first smart switch through the on-state voltage detection module, that is, collect the potential at the output end of the off-state power obtaining circuit. If the first smart switch resends the turn-off preparation instruction in step 505, the first smart switch also needs to restart timing.

Correspondingly, in step 507, the first smart switch successfully receives the ready information fed back by the second smart switch based on the turn-off preparation instruction resent by the first smart switch, adjusts the switch status of the first smart switch based on the ready information, and then sends the turn-off instruction to the second smart switch in step 508, so that the second smart switch can complete status switching based on the turn-off instruction.

However, if the duration for re-performing timing reaches the second duration threshold, and the potential at the first smart switch is still less than the preset voltage threshold, the first smart switch may determine that switching of the switch status of the second smart switch is not completed, and the turn-off instruction fails to be sent. The first smart switch may switch the switch status of the first smart switch from the turn-off state to the turn-on state again, to maintain normal working of the first smart switch.

In addition, after switching of the switch status is completed again, the first smart switch may feed back that communication between the first smart switch and the second smart switch is abnormal, and the first smart switch, the second smart switch, and the current local area network need to be maintained in time, so that the light fixture can be normally controlled through the first smart switch and the second smart switch.

A process in which the first smart switch feeds back the communication exception between the first smart switch and the second smart switch is similar to the process in which the first smart switch feeds back the control system exception in step 503. Details are not described herein again.

In addition, if the duration for re-performing timing reaches the second duration threshold, and the potential at the first smart switch is greater than or equal to the preset voltage threshold, the first smart switch may determine that the second smart switch fails to send the second status feedback information to the first smart switch, but the switching of the switch status of the second smart switch has completed, and determine that the control system is normal.

In addition, it should be noted that, the foregoing description is provided by using a wireless communication manner between the first smart switch and the second smart switch. However, during actual application, data may be exchanged between the first smart switch and the second smart switch in a wired communication manner.

For example, any smart switch of the first smart switch and the second smart switch may adjust different statuses of the switch device in the on-state power obtaining circuit, so that the switch device continuously switches between the turn-on state and the turn-off state. This causes a potential change between the L terminal and the L1 terminal of the another smart switch, so that the another smart switch can complete data exchange between the first smart switch and the second smart switch based on the continuously changing potential.

In conclusion, according to the device control method provided in this embodiment of this application, after the status switching action triggered for the first smart switch or the second smart switch is detected, the first smart switch exchanges data with the second smart switch, so that the first smart switch and the second smart switch can synchronously complete switching of switch statuses. This can avoid that any smart switch cannot work normally because the first smart switch and the second smart switch are in different statuses, and can improve stability and reliability of normal working of the first smart switch and the second smart switch.

In addition, data is exchanged between the first smart switch and the second smart switch in a plurality of manners, so that flexibility of data exchange between the first smart switch and the second smart switch can be improved. Further, data is exchanged between the first smart switch and the second smart switch in a wired manner, so that a data delay between the first smart switch and the second smart switch can be reduced, and reliability and timeliness of data exchange can be improved.

In addition, a plurality of smart switches are disposed to replace original mechanical switches, so that an electrical device can be controlled through any smart switch. This can improve flexibility and aesthetics of the smart control system.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Corresponding to the device control method in the foregoing embodiments, an embodiment of this application further provides a device control apparatus. The apparatus has a function of implementing the device control method corresponding to any one of the foregoing FIG. 5. Details are not described herein again.

A person skilled in the art may clearly understand that, for the purpose of convenient and brief description, division into the foregoing functional units and modules is merely used as an example for illustration. During actual application, the foregoing functions may be allocated to different functional units and modules for implementation based on a requirement. In other words, an inner structure of the apparatus is divided into different functional units or modules, to implement all or some of the functions described above. The functional units and modules in embodiments may be integrated into one processing unit, or each unit may exist alone physically, or two or more units may be integrated into one unit. The integrated unit may be implemented in a form of hardware, or may be implemented in a form of a software functional unit. In addition, specific names of the functional units and modules are merely for ease of distinguishing from each other, but are not intended to limit the protection scope of this application. For a specific working process of the units and modules in the foregoing system, refer to a corresponding process in the method embodiments. Details are not described herein again.

In the foregoing embodiments, the description of each embodiment has respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

In embodiments provided in this application, it should be understood that the disclosed apparatus and method may be implemented in other manners. For example, the described system embodiment is merely an example. For example, division of the modules or units is merely logical function division, and there may be another division manner during actual implementation. For example, a plurality of units or components may be combined or may be integrated into another system, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, all or some of the procedures of the method in embodiments of this application may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a source code form, an object code form, an executable file form, some intermediate forms, or the like. The computer-readable medium may include at least any entity or apparatus that can carry computer program code to the smart switch, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disc. In some jurisdictions, the computer-readable medium cannot be the electrical carrier signal or the telecommunication signal according to legislation and patent practices.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device control method, applied to a first smart switch and a second smart switch, wherein the first smart switch and the second smart switch are connected to an electrical device, and the method comprises:
sending, by the first smart switch, a turn-on instruction to the second smart switch, wherein the turn-on instruction instructs to switch a switch status of the second smart switch from a turn-off state to a turn-on state;
receiving, by the second smart switch, the turn-on instruction, and switching the switch status of the second smart switch;
sending, by the second smart switch, first status feedback information to the first smart switch, wherein the first status feedback information indicates that switching of the switch status of the second smart switch is completed; and
receiving, by the first smart switch, the first status feedback information, and switching a switch status of the first smart switch.

2. The method according to claim 1, wherein the method further comprises:
starting from the sending, by the first smart switch, a turn-on instruction to the second smart switch, starting, by the first smart switch, timing, and collecting a potential at the first smart switch; and
if after a first duration threshold is exceeded, the first smart switch does not receive the first status feedback information sent by the second smart switch, and the potential at the first smart switch does not change, sending, by the first smart switch, the turn-on instruction to the second smart switch again.

3. The method according to claim 2, wherein the method further comprises:
if the potential at the first smart switch is less than or equal to a preset voltage threshold, the first smart switch does not receive the first status feedback information sent by the second smart switch, and the first duration threshold is not exceeded, switching, by the first smart switch, the switch status.

4. The method according to claim 2, wherein the method further comprises:
if after a second duration threshold is exceeded, the first smart switch does not receive the first status feedback information sent by the second smart switch, and the potential at the first smart switch does not change, feeding back, by the first smart switch, an exception.

5. The method according to any one of claims 1 to 4, wherein the sending, by the first smart switch, a turn-on instruction to the second smart switch comprises:
in response to status switching triggered for the first smart switch, sending, by the first smart switch, the turn-on instruction to the second smart switch.

6. The method according to any one of claims 1 to 5, wherein data is exchanged between the first smart switch and the second smart switch in a wired communication or wireless communication manner.

7. A device control method, applied to a first smart switch and a second smart switch, wherein the first smart switch and the second smart switch are connected to an electrical device, and the method comprises:
sending, by the first smart switch, a turn-off preparation instruction to the second smart switch, wherein the turn-off preparation instruction instructs the second smart switch to prepare for switching from a turn-on state to a turn-off state;
receiving, by the second smart switch, the turn-off preparation instruction, and sending ready information to the first smart switch, wherein the ready information indicates that the second smart switch is ready to switch a switch status of the second smart switch;
receiving, by the first smart switch, the ready information, switching a switch status of the first smart switch from a turn-on state to a turn-off state, and sending a turn-off instruction to the second smart switch, wherein the turn-off instruction instructs the second smart switch to switch from the turn-on state to the turn-off state; and
receiving, by the second smart switch, the turn-off instruction, and switching the switch status of the second smart switch.

8. The method according to claim 7, wherein the method further comprises:
starting from the sending, by the first smart switch, a turn-off preparation instruction to the second smart switch, starting, by the first smart switch, timing, and collecting a potential at the first smart switch; and
if after a first duration threshold is exceeded, the first smart switch does not receive the ready information sent by the second smart switch, and the potential at the first smart switch does not change, sending, by the first smart switch, the turn-off preparation instruction to the second smart switch again, and re-performing timing.

9. The method according to claim 8, wherein after the sending, by the first smart switch, the turn-off preparation instruction to the second smart switch again, and re-performing timing, the method further comprises:
receiving, by the second smart switch, the turn-off preparation instruction, and sending the ready information to the first smart switch;
successfully receiving, by the first smart switch, the ready information, switching, by the first smart switch, the switch status of the first smart switch from the turn-on state to the turn-off state, and sending the turn-off instruction to the second smart switch; and
receiving, by the second smart switch, the turn-off instruction, and switching the switch status of the second smart switch.

10. The method according to claim 8, wherein after the sending, by the first smart switch, the turn-off preparation instruction to the second smart switch again, and re-performing timing, the method further comprises:
if duration for re-performing timing reaches a second duration threshold, and the potential at the first smart switch is less than a preset voltage threshold, switching, by the first smart switch, the switch status from the turn-off state to the turn-on state again; and
feeding back, by the first smart switch, an exception.

11. The method according to claim 10, wherein the method further comprises:
if the duration for re-performing timing reaches the second duration threshold, and the potential at the first smart switch is greater than or equal to the preset voltage threshold, determining, by the first smart switch, that switching of the switch status of the second smart switch is completed.

12. The method according to any one of claims 7 to 11, wherein after the second smart switch receives the turn-off instruction, and switches the switch status of the second smart switch based on the turn-off instruction, the method further comprises:
sending, by the second smart switch, second status feedback information to the first smart switch, wherein the second status feedback information indicates that the switching of the switch status of the second smart switch is completed; and
receiving, by the first smart switch, the second status feedback information, and determining that the switching of the switch status of the second smart switch is completed.

13. The method according to any one of claims 7 to 12, wherein after the receiving, by the second smart switch, the turn-off preparation instruction, the method further comprises:
determining, by the second smart switch, that communication between the first smart switch and the second smart switch is normal.

14. The method according to any one of claims 7 to 13, wherein the sending, by the first smart switch, a turn-off preparation instruction to the second smart switch comprises:
in response to status switching triggered for the first smart switch, sending, by the first smart switch, the turn-off preparation instruction to the second smart switch.

15. The method according to any one of claims 7 to 14, wherein data is exchanged between the first smart switch and the second smart switch in a wired communication or wireless communication manner.

16. A smart switch, wherein the smart switch comprises: a processor, a magnetic latching relay, an on-state voltage detection module, an off-state voltage detection module, an on-state power obtaining circuit, an off-state power obtaining circuit, and a power conversion circuit, wherein
the processor is connected to both the magnetic latching relay and the power conversion circuit, the magnetic latching relay and the on-state power obtaining circuit that are connected in series are connected in parallel to the off-state power obtaining circuit, and both the off-state power obtaining circuit and the on-state power obtaining circuit are connected to the power conversion circuit; and
both an output end of the on-state voltage detection module and an output end of the off-state voltage detection module are connected to the processor, an input end of the on-state voltage detection module is connected to an output end of the on-state power obtaining circuit, and an input end of the off-state voltage detection module is connected to an output end of the off-state power obtaining circuit.

17. The smart switch according to claim 16, wherein the output end of the on-state power obtaining circuit is a voltage collection point corresponding to the on-state voltage detection module, and the output end of the off-state power obtaining circuit is a voltage collection point corresponding to the off-state voltage detection module;
the on-state voltage detection module comprises a switch device, an energy storage capacitor, a voltage divider resistor, and a pull-up resistor, and/or the off-state voltage detection module comprises a switch device, an energy storage capacitor, a voltage divider resistor, and a pull-up resistor; and
the voltage divider resistor is connected in series between a control end of the switch device and the corresponding voltage collection point, the pull-up resistor is connected in series between a first end of the switch device and a power supply voltage, the energy storage capacitor is connected in series between the corresponding voltage collection point and a ground potential, the first end of the switch device is connected to the processor, and a second end of the switch device is connected to the ground potential.

18. The smart switch according to claim 16, wherein the output end of the on-state power obtaining circuit is a voltage collection point corresponding to the on-state voltage detection module, and the output end of the off-state power obtaining circuit is a voltage collection point corresponding to the off-state voltage detection module;
the on-state voltage detection module comprises a comparison module, an energy storage capacitor, and voltage divider resistors, and/or the off-state voltage detection module comprises a comparison module, an energy storage capacitor, and voltage divider resistors;
a first input end of the comparison module is connected to a reference voltage, a second input end of the comparison module is connected to the corresponding voltage collection point, and an output end of the comparison module is connected to the processor;
the voltage divider resistors are separately connected in series between the first input end of the comparison module and the reference voltage, and connected in series between the second input end of the comparison module and the corresponding voltage collection point; and
the energy storage capacitor is connected in series between the corresponding voltage collection point and a ground potential.

19. A control system, wherein the control system comprises a first smart switch and a second smart switch, and the first smart switch and the second smart switch are connected to an electrical device; and
the first smart switch and the second smart switch are configured to synchronize switch statuses of the first smart switch and the second smart switch based on the device control method according to any one of claims 1 to 6 or claims 7 to 15.

20. A computer-readable storage medium, wherein the computer-readable storage medium stores a computer program; and when the computer program is executed by a processor, the device control method according to any one of claims 1 to 6 or claims 7 to 15 is implemented.

21. A chip system, wherein the chip system comprises a memory and a processor, and the processor executes a computer program stored in the memory, to implement the device control method according to any one of claims 1 to 6 or claims 7 to 15.
